# FASCICULE DE BREVET EUROPEEN

(11) **EP 1 992 109 B1**
(45) Date de publication et mention de la délivrance du brevet: **04.05.2016**
(21) Numéro de dépôt: 07731679.2
(22) Date de dépôt: 01.03.2007
(51) Int. Cl.: H04L 12/70, H04L 12/24, H04W 40/32, H04L 12/715

(54) **PROCÉDÉ D'ORGANISATION DE NOEUDS D'UN RÉSEAU EN GROUPEMENTS DE NOEUDS, PROGRAMME D'ORDINATEUR POUR LA MISE EN OEUVRE D'UN TEL PROCÉDÉ, ET DISPOSITIF DE COMMUNICATION FORMANT NOEUD D'UN RÉSEAU DE NOEUDS**
VERFAHREN ZUR EINTEILUNG VON KNOTEN EINES NETZWERKES IN KNOTENGRUPPEN, COMPUTERPROGRAMM ZUR UMSETZUNG EINES DERARTIGEN VERFAHRENS UND KNOTEN EINES KNOTENNETZWERKES BILDENDE KOMMUNIKATIONSVORRICHTUNG
METHOD OF ORGANIZING NODES OF A NETWORK INTO GROUPINGS OF NODES, COMPUTER PROGRAM FOR IMPLEMENTING SUCH A METHOD AND COMMUNICATION DEVICE FORMING A NODE OF A NETWORK OF NODES

(30) Priorité: 03.03.2006 FR 0601927
(43) Date de publication de la demande: 19.11.2008
(73) Titulaire: Orange, 75015 Paris (FR)
(72) Inventeur: MOHAMED-RASHEED, Tinku Create-Net Research, I-38100 Trento (IT); GOURHANT, Yvon, F-22300 Lannion (FR); REYNAUD, Laurent, F-22660 Trevou-Treguignec (FR)
(86) Numéro de dépôt international: PCT/FR2007/050862
(87) Numéro de publication internationale: WO 2007/099264

(56) Documents cités:
- WO-A-03/039071
- WO-A-03/084160
- US-A1- 2003 204 623
- US-A1- 2004 018 839
- US-B1- 6 363 416

## Description

La présente invention concerne un procédé d'organisation de noeuds d'un réseau en groupements de noeuds, un programme d'ordinateur pour la mise en oeuvre d'un tel procédé, et un dispositif de communication formant noeud d'un réseau de noeuds.

Afin de faciliter le routage de données dans un réseau, notamment lorsque ce réseau comporte un grand nombre de noeuds, il est connu d'organiser les noeuds de ce réseau en groupements (également appelés « clusters » conformément à la terminologie anglaise).

Un noeud de chaque groupement, dit noeud-maître, est choisi pour assurer l'organisation et la maintenance du groupement de noeuds dont il fait partie, notamment en servant de passerelle entre ce groupement et les autres noeuds du réseau. A cet effet, les noeuds-maîtres des groupements communiquent entre eux pour le routage de données d'un noeud d'un groupement à un autre noeud d'un autre groupement, en servant d'intermédiaire entre ces noeuds.

On notera que l'organisation des noeuds d'un réseau en groupements est particulièrement nécessaire dans le cas d'un réseau ad-hoc, c'est à dire un réseau ne comportant pas d'infrastructure prédéterminée, dans lequel on ne dispose en outre que d'une bande passante limitée et dans lequel les noeuds sont potentiellement mobiles.

Les noeuds d'un réseau ad-hoc étant potentiellement mobiles, il est parfois nécessaire de réorganiser les groupements de noeuds. Ainsi, il est préférable de disposer d'un procédé rapide et efficace d'organisation des noeuds du réseau en groupements de noeuds.

Un tel procédé rapide et efficace est particulièrement nécessaire dans un réseau ad-hoc à grande échelle, c'est à dire un réseau ad-hoc comportant un grand nombre de noeuds, par exemple plus d'une centaine de noeuds, et dont les noeuds sont particulièrement mobiles.

Le document US2004/0018839 propose un tel procédé d'organisation des noeuds en groupements, dans lequel un noeud est choisi en tant que noeud-maître.

On connaît déjà, dans l'état de la technique, un procédé d'organisation de noeuds d'un réseau en groupement de noeuds, dans lequel au moins un noeud, dit noeud-maître, est choisi pour servir de passerelle entre un groupement de noeuds et d'autres noeuds du réseau, le procédé comportant :
- une étape de calcul, pour chaque noeud, d'une valeur numérique, dite poids, représentant l'aptitude de ce noeud à être le noeud-maître d'un groupement de noeuds,
- une étape d'élection, parmi les noeuds, d'un noeud-maître d'un groupement, tel que le poids de ce noeud-maître est supérieur ou égal aux poids de chaque autre noeud du groupement comportant ce noeud-maître.

En général, le poids d'un noeud est calculé en tenant compte de paramètres correspondant à des propriétés inhérentes à ce noeud, tels que, par exemple, sa mobilité, sa puissance de transmission, l'étendue de sa zone de couverture, la puissance de sa batterie, sa connectivité, etc.

Le poids d'un noeud peut également être calculé en tenant compte de paramètres correspondant à des propriétés structurelles du réseau, tels que, par exemple, le nombre de noeuds adjacents au noeud dont on calcule le poids.

Le document WO03/084160 propose un tel procédé d'organisation des noeuds en groupements, dans lequel un noeud est choisi en tant que noeud-maître en fonction de poids calculés.

Conformément à ce procédé classique d'organisation de noeuds, chaque noeud du réseau transmet une information contenant son poids vers les noeuds qui lui sont adjacents, généralement par routage par inondation. Le noeud choisi pour être le noeud-maître est alors le noeud dont le poids est plus fort que les poids de tous les noeuds qui lui sont adjacents.

On notera qu'un tel procédé est généralement coûteux en ressources, et qu'il ne permet généralement de former que des groupements de noeuds de petites tailles. En effet, bien qu'il soit possible d'organiser les noeuds en groupement de plus grandes tailles, chaque noeud doit, dans ce cas, transmettre l'information concernant son poids à un grand nombre de noeuds, ce qui augmente considérablement les coûts en ressource et en temps système.

La solution de l'invention ne présente pas les inconvénients précités, en proposant un procédé d'organisation de noeuds d'un réseau en groupements de noeuds qui est relativement simple, rapide et efficace, tout en étant peu coûteux en ressources.

En effet, l'invention a pour objet un procédé d'organisation de noeuds d'un réseau en groupements de noeuds, dans lequel au moins un noeud, dit noeud-maître, est choisi pour servir de passerelle entre un groupement de noeuds et d'autres noeuds du réseau, le procédé comportant :
- une étape de calcul, pour chaque noeud, d'une valeur numérique, dite poids, représentant l'aptitude de ce noeud à être le noeud-maître d'un groupement de noeuds,
- une étape d'élection, parmi les noeuds, d'un noeud-maître d'un groupement, tel que le poids de ce noeud-maître est supérieur ou égal aux poids de chaque autre noeud du groupement comportant ce noeud-maître,
**caractérisé en ce que** le procédé comporte en outre, entre l'étape de calcul et l'étape d'élection d'un noeud-maître :
- une étape de stockage, dans chaque noeud, d'une information contenant un identifiant du noeud de poids le plus fort connu par ce noeud et la valeur de ce poids le plus fort, le noeud de poids le plus fort connu étant le noeud lui-même si ce dernier n'a pas reçu d'autre information,
- une étape de transmission, par chaque noeud vers des noeuds adjacents à ce noeud, de l'information stockée dans ce noeud,
- une étape de comparaison, pour chaque noeud, des informations transmises à ce noeud lors de l'étape de transmission avec l'information stockée dans ce noeud, afin de déterminer un nouveau noeud de poids le plus fort connu par ce noeud,
les étapes de stockage, de transmission et de comparaison étant successivement réalisées un nombre prédéterminé de fois, au terme desquelles on réalise l'étape d'élection d'un noeud-maître, au cours de laquelle un noeud dont l'information stockée contient son propre identifiant est choisi pour être un noeud-maître.

Conformément à ce procédé, la transmission des informations concernant les poids des noeuds ne se fait que de proche en proche, ce qui est moins coûteux en ressources qu'une diffusion à tous les autres noeuds d'un groupement, notamment lorsque ce groupement est de grande taille.

Par ailleurs, il n'est pas nécessaire que chaque noeud d'un groupement connaisse les poids de tous les autres noeuds du groupement pour choisir le noeud-maître. En effet, grâce au procédé selon l'invention, seules les informations concernant les noeuds de poids le plus fort connu sont transmises aux noeuds.

Enfin, on notera que ce procédé permet d'organiser des groupements de noeuds de tailles aussi grandes que nécessaires, sans pour autant augmenter la complexité de ce procédé. En effet, il suffit, pour augmenter la taille des groupements, d'augmenter le nombre prédéterminé de réalisations des étapes de stockage, de transmission et de comparaison. Ainsi, l'information concernant le noeud de poids le plus fort est diffusée à un plus grand nombre de noeuds, s'étendant lorsque le nombre prédéterminé de réalisations augmente.

Il apparaît donc clairement que l'invention permet d'organiser de manière simple, rapide et efficace les noeuds d'un réseau en groupements, permettant ainsi un meilleur routage des informations dans ce réseau.

Un procédé d'organisation selon l'invention peut en outre comporter l'une ou plusieurs des caractéristiques suivantes :
- le procédé comporte, après l'étape d'élection du noeud-maître, une étape de formation d'un groupement de noeuds, au cours de laquelle chaque noeud dont l'information stockée contient l'identifiant du noeud-maître choisi est inclus dans le groupement de noeuds comportant ce noeud-maître ;
- le procédé comporte une première étape préliminaire au cours de laquelle on fournit à chaque noeud du réseau une information concernant le nombre prédéterminé de répétition des étapes de stockage, de transmission et de comparaison ;
- le procédé comporte une deuxième étape préliminaire au cours de laquelle on fournit à chaque noeud du réseau une liste de tous les noeuds adjacents à ce noeud ;
- le procédé comporte une troisième étape préliminaire au cours de laquelle on fournit à chaque noeud du réseau des paramètres de calcul de son poids ;
- le procédé comporte une étape, suivant l'étape de transmission, de vérification, pour chaque noeud, que chaque noeud adjacent à ce noeud a transmis une information au cours de l'étape de transmission, un noeud n'ayant pas transmis l'information étant supprimé de la liste des noeuds adjacents ;
- au cours de l'étape de comparaison si deux informations contiennent un poids identique, on détermine quel est le noeud dont le poids est le plus fort à l'aide d'une décision arbitraire, par exemple par comparaison de la valeur des identifiants contenus par les informations, le noeud dont l'identifiant est le plus grand étant considéré comme étant le noeud de poids le plus fort.

L'invention a également pour objet un programme d'ordinateur pour la mise en oeuvre d'un procédé d'organisation de noeuds tel que défini précédemment, destiné à être installé sur un noeud d'un réseau de noeuds, caractérisé en ce qu'il comporte des instructions logicielles pour :
- calculer une valeur numérique, dite poids, représentant l'aptitude du noeud à être le noeud-maître d'un groupement de noeuds,
- stocker, dans le noeud, une information contenant un identifiant du noeud de poids le plus fort connu par ce noeud et la valeur de ce poids le plus fort, le noeud de poids le plus fort connu étant le noeud lui-même si ce dernier n'a pas reçu d'autre information
- transmettre vers des noeuds adjacents au noeud, l'information stockée dans ce noeud,
- comparer des informations transmises à ce noeud avec l'information stockée dans ce noeud, afin de déterminer un nouveau noeud de poids le plus fort connu par ce noeud,
- répéter les instructions pour stocker, transmettre et comparer un nombre prédéterminé de fois, et
- vérifier si l'information stockée contient le propre identifiant du noeud.

L'invention a enfin pour objet un dispositif de communication formant noeud d'un réseau de noeuds, comprenant des moyens de calcul d'une valeur numérique, dite poids, représentant l'aptitude de ce noeud à servir de passerelle entre le groupement de noeuds et d'autres noeuds du réseau, caractérisé en ce que le dispositif comporte :
- des moyens de stockage d'une information (14) contenant un identifiant du noeud de poids le plus fort connu par le dispositif et la valeur de ce poids le plus fort, le noeud de poids le plus fort connu étant le dispositif lui-même si ce dernier n'a pas reçu d'autre information,
- des moyens de transmission vers des noeuds adjacents au dispositif, de l'information (14) stockée dans ce dispositif,
- des moyens de comparaison d'informations (14) transmises au dispositif avec l'information stockée dans ce dispositif, afin de déterminer un nouveau noeud de poids le plus fort connu par le dispositif,
- des moyens de vérification destinés à vérifier si l'information stockée contient le propre identifiant du dispositif,
lesdits moyens de vérification étant aptes à être activés après que les moyens de stockage, de transmission et de comparaison ont été successivement activés un nombre (k) prédéterminé de fois, et en ce que le dispositif comprend des moyens de détermination que ce dispositif est un noeud-maître (M), lesdits moyens de détermination étant aptes à être activés si les moyens de vérification confirment que l'information stockée contient le propre identifiant du dispositif.

Un tel dispositif peut notamment héberger un programme d'ordinateur tel que défini précédemment, qui en pilote les moyens de stockage, de transmission, de comparaison, de vérification et de détermination.

L'invention sera mieux comprise à la lecture de la description qui va suivre, donnée uniquement à titré d'exemple et faite en se référant aux dessins annexés dans lesquels :
- la figure 1 représente les étapes d'un procédé d'organisation selon un exemple de mode de réalisation de l'invention,
- les figures 2 à 4 représentent un réseau de noeuds dans lequel est mis en oeuvre le procédé d'organisation de la figure 1, au cours de différentes étapes de ce procédé.

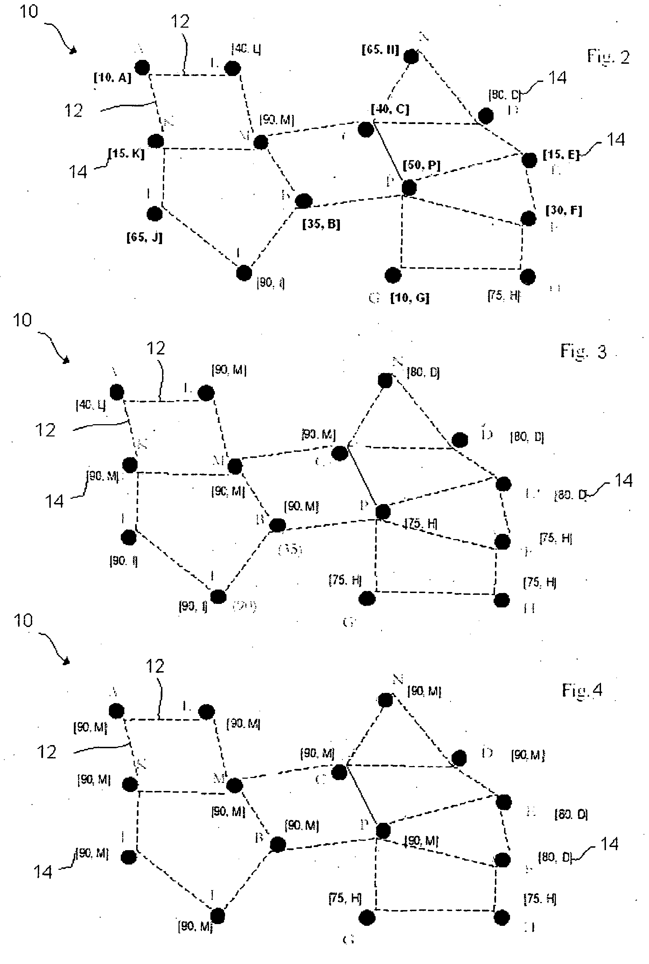

On a représenté sur la figure 2 un réseau de noeuds, par exemple un réseau ad-hoc, désigné par la référence générale 10. Dans ce réseau, chaque noeud est un dispositif de communication sans fils.

Le réseau 10 comporte des noeuds potentiellement mobiles, désignés par les références A, B, C,..., P, et liés entre eux par des liens 12. Les liens 12 sont généralement des câbles dans le cas d'un réseau filaire classique, ou sont des liens virtuels dans le cas d'un réseau sans fil tel qu'un réseau ad-hoc. Dans le cas d'un réseau sans fil, un lien 12 entre deux noeuds signifie que chacun de ces noeuds se trouve dans la zone de couverture de l'autre, et que chacun de ces noeuds est donc susceptible d'échanger des données avec l'autre noeud.

Chaque noeud du réseau 10 comporte des moyens de stockage d'une information 14, cette information 14 contenant un identifiant du noeud de poids le plus fort connu par le noeud dans lequel est stockée l'information 14, ainsi que la valeur de ce poids le plus fort connu.

On rappelle que le poids d'un noeud représente son aptitude à être le noeud-maître d'un groupement de noeuds.

Sur les figures 2 à 4, chaque information 14 stockée dans un noeud est représentée par un nombre et une lettre entre crochets, la lettre représentant l'identifiant du noeud de poids le plus fort connu et le nombre représentant ce poids le plus fort connu.

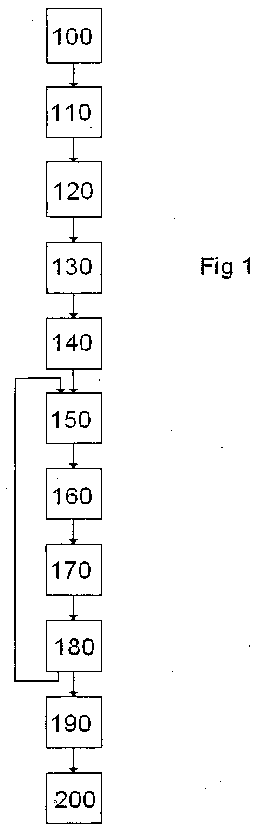

On a représenté sur la figure 1 le procédé d'organisation des noeuds du réseau 10 selon un exemple de mode de réalisation de l'invention.

Au cours d'une première étape préliminaire 100, on fournit, à chaque noeud du réseau 10, une information concernant un nombre prédéterminé k représentant la taille des groupements de noeuds que l'on désire organiser.

On rappellera qu'on appelle taille k d'un groupement de noeuds le nombre minimum de liens 12 par lesquels il est nécessaire de passer pour transmettre un message entre le noeud-maître et un noeud périphérique de ce groupement de noeuds.

La taille k des groupements de noeuds dépend généralement du nombre de noeuds du réseau, les groupements de noeuds étant de préférence d'autant plus grands que le réseau comporte un grand nombre de noeuds.

Au cours d'une deuxième étape préliminaire 110, on fournit à chaque noeud du réseau une liste de tous les noeuds adjacents à ce noeud, c'est à dire tous les noeuds qui lui sont reliés par un seul lien 12.

Afin de constituer ces listes, chaque noeud peut par exemple être équipé de moyens pour identifier les noeuds qui lui sont adjacents, notamment des moyens d'émission et de réception d'un signal de reconnaissance prévu à cet effet.

Lors d'une troisième étape préliminaire 120, on fournit à chaque noeud du réseau des paramètres pour le calcul de son poids.

En général, ces paramètres correspondent à des propriétés inhérentes à chaque noeud, telles que, par exemple, sa mobilité, sa puissance de transmission, l'étendue de sa zone de couverture, la puissance de sa batterie, sa connectivité, etc. Des paramètres correspondant à des propriétés structurelles du réseau, tels que, par exemple, le nombre de noeuds adjacents au noeud dont on calcule le poids, peuvent également être pris en compte dans le calcul du poids.

On notera que cette étape 120 est facultative, notamment dans le cas où les paramètres pour les calculs de poids sont déjà stockés dans les noeuds.

Au cours d'une étape 130, on calcule, pour chaque noeud, le poids de ce noeud, à l'aide des paramètres définis au cours de l'étape 120.

Au cours d'une étape 140, on stocke, dans chaque noeud, l'information 14 contenant l'identifiant du noeud de poids le plus fort connu par ce noeud et la valeur de ce poids le plus fort.

A ce stade du procédé, le noeud de poids le plus fort connu par ce noeud est le noeud lui-même, puisque ce dernier n'a pas encore reçu d'autre information. Sur la figure 2, les informations stockées 14 associées à chacun des noeuds représentés comportent chacune l'identifiant du noeud dans lequel elle est stockée et le poids de ce noeud.

On notera que les valeurs des poids représentés sur la figure 2 sont purement symboliques et données à titre d'exemple pour une meilleure compréhension du procédé d'organisation selon l'invention.

Au cours d'une étape 150, chaque noeud transmet l'information 14 qu'il a stockée aux noeuds qui lui sont adjacents. La transmission de cette information 14 est réalisée de façon connue en soi, par exemple par routage par inondation.

De préférence, l'étape 150 de transmission est suivie d'une étape 160, au cours de laquelle chaque noeud vérifie s'il a bien reçu les informations 14 de chacun des noeuds qui lui sont adjacents. A cet effet, chaque noeud compare les expéditeurs des informations 14 qu'il a reçues avec la liste des noeuds qui lui sont adjacents qui lui a été fournie au cours de la deuxième étape préliminaire 110.

Dans le cas où un noeud n'a pas reçu les informations 14 de tous les noeuds qui lui sont adjacents, ce noeud peut envoyer une requête au noeud adjacent dont il n'a pas reçu l'information 14. Ce noeud adjacent doit alors transmettre l'information 14 en retour.

Cette requête est destinée à vérifier si ce noeud adjacent n'est plus disponible, ou si l'information n'a pas été reçue à cause d'une erreur de transmission.

Suite à cette requête, si le noeud n'a toujours pas reçu l'information 14 du noeud adjacent, on considère que ce noeud adjacent n'est plus disponible. Ceci est par exemple le cas si ce noeud adjacent s'est déplacé hors de la zone de la couverture du noeud ou alors s'il est hors service. Dans ce cas, ce noeud adjacent est supprimé de la liste des noeuds adjacents du noeud.

Au cours d'une étape 170, chaque noeud compare toutes les informations 14 qui lui ont été transmises lors de l'étape de transmission 150, ainsi qu'avec l'information 14 stockée dans ce noeud.

Cette comparaison a pour but de déterminer quel est le noeud de poids le plus fort connu par le noeud. A cet effet, on compare les poids contenus par les informations 14 reçues, et on retient parmi ces poids celui qui est le plus fort.

Dans certain cas, par exemple dans le cas du noeud B, deux noeuds adjacents I et M ont un poids identique.

Dans ce cas, afin de déterminer quel est, parmi ces deux noeuds, le noeud de poids le plus fort, on utilise une décision arbitraire. Par exemple, on compare les identifiants de ces noeuds, le noeud dont l'identifiant étant le plus grand étant considéré comme étant le noeud de poids le plus fort.

Dans l'exemple représenté, l'identifiant du noeud M est supérieur à l'identifiant du noeud I. Le noeud B considère donc que le noeud de poids le plus fort connu est le noeud M.

Au cours d'une étape 180, on stocke dans le noeud une nouvelle information 14 correspondant au nouveau noeud de poids le plus fort connu, cette information 14 étant destinée à écraser celle qui était précédemment stockée. En effet, l'information 14 précédente devient obsolète à partir du moment où le noeud a reçu des nouvelles informations.

On a représenté sur la figure 3 les noeuds du réseau 10 après cette étape de stockage 180. Sur cette figure, les informations stockées dans chaque noeud correspondent au noeud de poids le plus fort actuellement connu par ce noeud.

Par exemple, les informations 14 stockées dans les noeuds B, C, J, K et L comportent l'identifiant et le poids du noeud M, ce dernier ayant un poids plus fort que le leur et que celui des autres noeuds qui leur sont adjacents.

Au terme de l'étape 180, on obtient une pluralité de noeuds du réseau ayant stocké une même information concernant un noeud du poids le plus fort connu, comme cela est représenté sur la figure 3. Ainsi, il est possible de choisir un noeud-maître pour le groupement des noeuds contenant cette même information, mais il est également possible d'augmenter encore la taille de ce groupement.

A cet effet, les étapes de transmission 150, de comparaison 170, et de stockage 180 peuvent être réitérées un nombre prédéterminé de fois, correspondant au nombre k représentant la taille du groupement déterminé lors de l'étape 100.

Ainsi, de préférence, on effectue, après l'étape de stockage 180, une incrémentation d'une variable de suivi, et on réalise à nouveau les étapes de transmission 150, de comparaison 170, et de stockage 180 tant que cette variable de suivi est inférieure à k.

Une fois que les étapes de transmission 150, de comparaison 170 et de stockage 180 ont été réalisées un nombre k de fois, on obtient au moins un groupement de noeuds de taille égalé à ce nombre k, dans lequel tous les noeuds du réseau ont stocké une même information 14 concernant le noeud du poids le plus fort de ce groupement, comme cela est représenté sur la figure 4.

Dans l'exemple représenté sur la figure 4, le noeud du poids le plus fort du groupement est le noeud M.

On réalise alors une étape 190, au cours de laquelle chaque noeud vérifie quel est l'identifiant contenu dans l'information 14 qu'il a stockée.

Si cet identifiant est celui de ce noeud lui-même, celui-ci est choisi pour être le noeud-maître du groupement, puisque son poids est supérieur ou égal au poids de chaque autre noeud de ce groupement.

On réalise alors une étape 200 de formation d'un groupement de noeuds, au cours de laquelle chaque noeud dont l'information stockée contient l'identifiant du noeud-maître M choisi est inclus dans le groupement de noeuds comportant ce noeud-maître M.

De préférence, au cours de cette étape, le noeud M envoie à tous les noeuds de son groupement un message destiné à confirmer qu'il est bien le noeud-maître de ce groupement.

On a ainsi réalisé, d'une manière simple et efficace, un groupement de noeuds, tout en ayant déterminé quel est son noeud-maître, ce groupement de noeud étant de taille k aussi grande que nécessaire (dans l'exemple représenté, la taille k est égale à 2).

On notera, que les noeuds du réseau dont l'information 14 stockée ne contient pas l'identifiant du noeud M ne font pas partie de son groupement. Dans l'exemple représenté sur la figure 4, c'est le cas des noeuds E, F, G et H.

Dans cet exemple, les informations 14 stockées dans les noeuds E et F contiennent l'identifiant du noeud D comme identifiant du noeud de poids le plus fort connu.

Cependant, ce noeud D n'est pas un noeud-maître puisqu'il fait partie du groupement dont le noeud-maître est le noeud M.

Ainsi, le noeud D n'a pas envoyé de message de confirmation selon lequel il est bien un noeud-maître, et les noeuds E et F restent alors des noeuds indépendants ne faisant partie d'aucun groupement.

Par ailleurs, l'information 14 stockée dans le noeud H contient son propre identifiant. Il est donc considéré comme étant le noeud-maître d'un groupement de noeuds dans lesquels l'information 14 stockée contient son identifiant, c'est à dire le noeud G, et possiblement d'autres noeuds non représentés.

Il apparaît clairement que lé procédé selon l'invention permet de générer de manière simple, rapide et efficace une pluralité de groupements de noeuds dans le réseau 10.

On notera qu'afin de réaliser le procédé d'organisation des noeuds, chaque noeud est de préférence muni d'un programme d'ordinateur pour la mise en oeuvre du procédé d'organisation de noeuds qui vient d'être décrit. Un tel programme d'ordinateur comporte notamment des instructions logicielles pour :
- calculer le poids du noeud,
- stocker, dans le noeud, l'information 14,
- transmettre vers des noeuds adjacents au noeud, l'information 14 stockée dans ce noeud,
- comparer des informations 14 transmises à ce noeud avec l'information 14 stockée dans ce noeud, afin de déterminer un nouveau noeud de poids le plus fort connu par ce noeud,
- répéter un nombre prédéterminé de fois les instructions pour stocker, transmettre et comparer, et
- vérifier si l'information stockée contient le propre identifiant du noeud.

Chaque dispositif de communication formant noeud du réseau comporte également, afin de mettre en oeuvre le procédé :
- des moyens de calcul du poids,
- des moyens de stockage de l'information (14),
- des moyens de transmission vers des noeuds adjacents au dispositif, de l'information (14) stockée dans ce dispositif,
- des moyens de comparaison d'informations (14) transmises au dispositif avec l'information stockée dans ce dispositif, afin de déterminer un nouveau noeud de poids le plus fort connu par le dispositif, et
- des moyens de vérification destinés à vérifier si l'information stockée contient le propre identifiant du dispositif.

Les moyens de vérification sont aptes à être activés après que les moyens de stockage, de transmission et de comparaison ont été successivement activés un nombre (k) prédéterminé de fois.

Le dispositif comprend en outre des moyens de détermination que ce dispositif est un noeud-maître (M), lesdits moyens de détermination étant aptes à être activés si les moyens de vérification confirment que l'information stockée contient le propre identifiant du dispositif.

On notera que l'invention n'est pas limitée au mode de réalisation précédemment décrit. En effet, on pourrait apporter diverses variantes au procédé précédemment décrit sans pour autant sortir du cadre de l'invention.

## Revendications

1. Procédé d'organisation de noeuds (A, B, C, ..,L) d'un réseau (10) en groupements de noeuds, dans lequel au moins un noeud (M), dit noeud-maître, est choisi pour servir de passerelle entre un groupement de noeuds et d'autres noeuds du réseau, le procédé comportant :
- une étape (130) de calcul, pour chaque noeud, d'une valeur numérique, dite poids, représentant l'aptitude de ce noeud à être le noeud-maître d'un groupement de noeuds,
- une étape (190) d'élection, parmi les noeuds, d'un noeud-maître d'un groupement, tel que le poids de ce noeud-maître est supérieur ou égal aux poids de chaque autre noeud du groupement comportant ce noeud-maître,
**caractérisé en ce que** le procédé comporte en outre, entre les étapes (130) de calcul et (190) d'élection d'un noeud-maître :
- une étape (140 180) de stockage, dans chaque noeud, d'une information (14) contenant un identifiant du noeud de poids le plus fort connu par ce noeud et la valeur de ce poids le plus fort, le noeud de poids le plus fort connu étant le noeud lui-même si ce dernier n'a pas reçu d'autre information,
- une étape (150) de transmission, par chaque noeud vers des noeuds adjacents à ce noeud, de l'information (14) stockée dans ce noeud,
- une étape (170) de comparaison, pour chaque noeud, des informations (14) transmises à ce noeud lors de l'étape de transmission (150) avec l'information stockée dans ce noeud, afin de déterminer un nouveau noeud de poids le plus fort connu par ce noeud,
les étapes de stockage (180), de transmission (150) et de comparaison (170) étant successivement réalisées un nombre (k) prédéterminé de fois, au terme desquelles on réalise l'étape (190) d'élection d'un noeud-maître, au cours de laquelle un noeud (M) dont l'information stockée contient son propre identifiant est choisi pour être un noeud-maître.

2. Procédé d'organisation de noeuds selon la revendication 1, comportant, après l'étape (190) d'élection du noeud-maître (M), une étape (200) de formation d'un groupement de noeuds, au cours de laquelle chaque noeud dont l'information stockée contient l'identifiant du noeud-maître choisi est inclus dans le groupement de noeuds comportant ce noeud-maître (M).

3. Procédé d'organisation de noeuds selon la revendication 1 ou 2, comportant préalablement à l'étape de calcul, une première étape préliminaire (100) au cours de laquelle on fournit à chaque noeud du réseau une information concernant le nombre prédéterminé (k) de répétition des étapes de stockage (180), de transmission (150) et de comparaison (170).

4. Procédé d'organisation de noeuds selon l'une quelconque des revendications 1 à 3, comportant préalablement à l'étape de calcul, une deuxième étape préliminaire (110) au cours de laquelle on fournit à chaque noeud du réseau une liste de tous les noeuds adjacents à ce noeud.

5. Procédé d'organisation de noeuds selon l'une quelconque des revendications 1 à 4, comportant préalablement à l'étape de calcul, une troisième étape préliminaire (120) au cours de laquelle on fournit à chaque noeud du réseau des paramètres de calcul de son poids.

6. Procédé d'organisation de noeuds selon la revendication 4, comportant une étape (160), faisant suite à l'étape de transmission (150), de vérification, pour chaque noeud, que chaque noeud adjacent à ce noeud a transmis une information (14) au cours de l'étape de transmission (150), un noeud n'ayant pas transmis l'information étant supprimé de la liste des noeuds adjacents.

7. Procédé d'organisation de noeuds selon l'une quelconque des revendications précédentes, dans lequel, au cours de l'étape de comparaison (170), si deux informations contiennent un poids identique, on détermine quel est le noeud dont le poids est le plus fort par comparaison de la valeur des identifiants contenus par les informations, le noeud dont l'identifiant est le plus grand étant considéré comme étant le noeud de poids le plus fort.

8. Programme d'ordinateur comportant des instructions pour la mise en oeuvre d'un procédé d'organisation de noeuds selon l'une quelconque des revendications 1 à 7, mis en oeuvre par un noeud d'un réseau de noeuds, lorsque ce programme est exécuté par un processeur.

9. Dispositif de communication formant noeud d'un réseau de noeuds, ledit dispositif comprenant des moyens de calcul d'une valeur numérique, dite poids, représentant l'aptitude de ce noeud à servir de passerelle entre le groupement de noeuds et d'autres noeuds du réseau, **caractérisé en ce que** le dispositif comporte :
- des moyens de stockage d'une information (14) contenant un identifiant du noeud de poids le plus fort connu par le dispositif et la valeur de ce poids le plus fort, le noeud de poids le plus fort connu étant le dispositif lui-même si ce dernier n'a pas reçu d'autre information,
- des moyens de transmission vers des noeuds adjacents au dispositif, de l'information (14) stockée dans ce dispositif,
- des moyens de comparaison d'informations (14) transmises au dispositif avec l'information stockée dans ce dispositif, afin de déterminer un nouveau noeud de poids le plus fort connu par le dispositif,
- des moyens de vérification destinés à vérifier si l'information stockée contient le propre identifiant du dispositif,
lesdits moyens de vérification étant aptes à être activés après que les moyens de stockage, de transmission et de comparaison ont été successivement activés un nombre (k) prédéterminé de fois, **et en ce que** le dispositif comprend des moyens de détermination que ce dispositif est un noeud-maître (M), lesdits moyens de détermination étant aptes à être activés si les moyens de vérification confirment que l'information stockée contient le propre identifiant du dispositif.

## Patentansprüche

1. Verfahren zur Einteilung von Knoten (A, B, C, ..., L) eines Netzwerks (10) in Knotengruppen, bei dem mindestens ein Knoten (M), Master-Knoten genannt, ausgewählt wird, um als Gateway zwischen einer Knotengruppe und anderen Knoten des Netzwerks zu dienen, wobei das Verfahren umfasst:
- einen Schritt (130) der Berechnung eines digitalen Werts, Gewicht genannt, für jeden Knoten, der die Eignung dieses Knotens, der Master-Knoten einer Knotengruppe zu sein, darstellt,
- einen Schritt (190) der Auswahl eines Master-Knotens einer Gruppe unter den Knoten, so dass das Gewicht dieses Master-Knotens größer oder gleich den Gewichten jedes anderen Knotens der Gruppe, umfassend diesen Master-Knoten, ist,
**dadurch gekennzeichnet, dass** das Verfahren ferner zwischen den Schritten der Berechnung (130) und der Auswahl (190) eines Master-Knotens umfasst:
- einen Schritt (140, 180) der Speicherung einer Information (14) in jedem Knoten, die einen Identifikator des diesem Knoten bekannten Knotens mit dem stärksten Gewicht und den Wert dieses stärksten Gewichts enthält, wobei der bekannte Knoten mit dem stärksten Gewicht der Knoten selbst ist, wenn dieser letztgenannte keine andere Information erhalten hat,
- einen Schritt (150) der Übertragung der in diesem Knoten gespeicherten Information (14) durch jeden Knoten zu an diesen Knoten angrenzenden Knoten,
- einen Schritt (170) des Vergleichs der an diesen Knoten während des Übertragungsschritts (150) übertragenen Informationen (14) für jeden Knoten mit der in diesem Knoten gespeicherten Information, um einen neuen diesem Knoten bekannten Knoten mit dem stärksten Gewicht zu bestimmen,
wobei die Schritte des Speicherns (180), der Übertragung (150) und des Vergleichs (170) nacheinander eine vorbestimmte Anzahl (k) von Malen durchgeführt werden, nach denen der Schritt (190) der Auswahl eines Master-Knotens erfolgt, während dessen ein Knoten (M), dessen gespeicherte Information seinen eigenen Identifikator enthält, ausgewählt wird, um ein Master-Knoten zu sein.

2. Verfahren zur Einteilung von Knoten nach Anspruch 1, umfassend nach dem Schritt (190) der Auswahl des Master-Knotens (M) einen Schritt (200) der Bildung einer Knotengruppe, während dessen jeder Knoten, dessen gespeicherte Information den Identifikator des gewählten Master-Knotens enthält, in die Knotengruppe, umfassend diesen Master-Knoten (M), eingeschlossen wird.

3. Verfahren zur Einteilung von Knoten nach Anspruch 1 oder 2, umfassend vor dem Berechnungsschritt einen ersten vorherigen Schritt (100), während dessen an jeden Knoten des Netzwerks eine Information geliefert wird, die die vorbestimmte Anzahl (k) von Wiederholungen der Schritte der Speicherung (180), der Übertragung (150) und des Vergleichs (170) betrifft.

4. Verfahren zur Einteilung von Knoten nach einem der Ansprüche 1 bis 3, umfassend vor dem Berechnungsschritt einen zweiten vorherigen Schritt (110), während dessen an jeden Knoten des Netzwerks eine Liste aller an diesen Knoten angrenzenden Knoten geliefert wird.

5. Verfahren zur Einteilung von Knoten nach einem der Ansprüche 1 bis 4, umfassend vor dem Berechnungsschritt einen dritten vorherigen Schritt (120), während dessen an jeden Knoten des Netzwerks Berechnungsparameter seines Gewichts geliefert werden.

6. Verfahren zur Einteilung von Knoten nach Anspruch 4, umfassend einen Schritt (160), der nach dem Übertragungsschritt (150) folgt, um für jeden Knoten zu überprüfen, ob jeder an diesen Knoten angrenzende Knoten eine Information (14) während des Übertragungsschritts (150) übertragen hat, wobei ein Knoten, der die Information nicht übertragen hat, aus der Liste der angrenzenden Knoten gestrichen wird.

7. Verfahren zur Einteilung von Knoten nach einem der vorhergehenden Ansprüche, bei dem während des Vergleichsschritts (170), wenn zwei Informationen ein identisches Gewicht enthalten, bestimmt wird, welches der Knoten ist, dessen Gewicht im Vergleich mit dem Wert der durch die Informationen enthaltenen Identifikatoren das stärkste ist, wobei der Knoten, dessen Identifikator am größten ist, als der Knoten mit dem stärksten Gewicht betrachtet wird.

8. Computerprogramm, umfassend Befehle für den Einsatz eines Verfahrens zur Einteilung von Knoten nach einem der Ansprüche 1 bis 7, das von einem Knoten eines Netzwerks von Knoten eingesetzt wird, wenn dieses Programm von einem Prozessor ausgeführt wird.

9. Kommunikationsvorrichtung, die einen Knoten eines Netzwerks von Knoten bildet, wobei die Vorrichtung Mittel zur Berechnung eines digitalen Werts, Gewicht genannt, umfasst, die die Eignung dieses Knotens, als Gateway zwischen der Knotengruppe und anderen Knoten des Netzwerks zu dienen, darstellen, **dadurch gekennzeichnet, dass** die Vorrichtung umfasst:
- Mittel zur Speicherung einer Information (14), die einen Identifikator des dieser Vorrichtung bekannten Knotens mit dem stärksten Gewicht und den Wert dieses stärksten Gewichts enthält, wobei der bekannte Knoten mit dem stärksten Gewicht die Vorrichtung selbst ist, wenn diese letztgenannte keine andere Information erhalten hat,
- Mittel zur Übertragung der in dieser Vorrichtung gespeicherten Information (14) zu an diese Vorrichtung angrenzenden Knoten,
- Mittel zum Vergleich der an die Vorrichtung mit der in dieser Vorrichtung gespeicherten Information übertragenen Informationen (14), um einen neuen der Vorrichtung bekannten Knoten mit dem stärksten Gewicht zu bestimmen,
- Mittel zur Überprüfung, die dazu bestimmt sind, zu überprüfen, ob die gespeicherte Information den eigenen Identifikator der Vorrichtung enthält,
wobei die Mittel zur Überprüfung geeignet sind, aktiviert zu werden, nachdem die Mittel zur Speicherung, Übertragung und zum Vergleich nacheinander eine vorbestimmte Anzahl (k) von Malen aktiviert wurden, und dass die Vorrichtung Mittel umfasst, um zu bestimmen, ob diese Vorrichtung ein Master-Knoten (M) ist, wobei die Bestimmungsmittel geeignet sind, aktiviert zu werden, wenn die Mittel zur Überprüfung bestätigen, dass die gespeicherte Information den eigenen Identifikator der Vorrichtung enthält.

## Claims

1. Method of organizing nodes (A, B, C,..., L) of a network (10) into groupings of nodes, in which at least one node (M), termed the master node, is chosen to serve as gateway between a grouping of nodes and other nodes of the network, the method comprising:
- a step (130) of calculating, for each node, a numerical value, termed the weight, representing the aptness of this node to be the master node of a grouping of nodes,
- a step (190) of electing, from among the nodes, a master node of a grouping, such that the weight of this master node is greater than or equal to the weights of each other node of the grouping comprising this master node,
**characterized in that** the method furthermore comprises, between the steps (130) of calculating and (190) of electing a master node:
- a step (140 180) of storing, in each node, an information cue (14) containing an identifier of the node of highest weight known by this node and the value of this highest weight, the node of highest weight known being the node itself if the latter has not received any other information cue,
- a step (150) of transmitting, by each node to nodes adjacent to this node, the information cue (14) stored in this node,
- a step (170) of comparing, for each node, the information cues (14) transmitted to this node during the transmitting step (150) with the information cue stored in this node, so as to determine a new node of highest weight known by this node,
the steps of storing (180), transmitting (150) and comparing (170) being carried out successively a predetermined number (k) of times, on conclusion of which the step (190) of electing a master node is carried out, in the course of which a node (M) whose stored information cue contains its own identifier is chosen to be a master node.

2. Method of organizing nodes according to Claim 1, comprising, after the step (190) of electing the master node (M), a step (200) of forming a grouping of nodes, in the course of which each node whose stored information cue contains the identifier of the chosen master node is included in the grouping of nodes comprising this master node (M).

3. Method of organizing nodes according to Claim 1 or 2, comprising prior to the calculating step a first preliminary step (100) in the course of which each node of the network is provided with an information cue relating to the predetermined number (k) of repetition of the steps of storing (180), transmitting (150) and comparing (170).

4. Method of organizing nodes according to any one of Claims 1 to 3, comprising prior to the calculating step a second preliminary step (110) in the course of which each node of the network is provided with a list of all the nodes adjacent to this node.

5. Method of organizing nodes according to any one of Claims 1 to 4, comprising prior to the calculating step a third preliminary step (120) in the course of which each node of the network is provided with parameters for calculating its weight.

6. Method of organizing nodes according to Claim 4, comprising a step (160), following on from the transmitting step (150), of verifying, for each node, that each node adjacent to this node has transmitted an information cue (14) in the course of the transmitting step (150), a node not having transmitted the information cue being deleted from the list of adjacent nodes.

7. Method of organizing nodes according to any one of the preceding claims, in which, in the course of the comparing step (170), if two information cues contain an identical weight, that node whose weight is the highest is determined by comparison of the value of the identifiers contained by the information cues, the node whose identifier is the largest being considered to be the node of highest weight.

8. Computer program comprising instructions for implementing a method of organizing nodes according to any one of Claims 1 to 7, implemented a node of a network of nodes, when this program is executed by a processor.

9. Communication device forming a node of a network of nodes, said device comprising means for calculating a numerical value, termed the weight, representing the aptness of this node to serve as gateway between the grouping of nodes and other nodes of the network, **characterized in that** the device comprises:
- means for storing an information cue (14) containing an identifier of the node of highest weight known by the device and the value of this highest weight, the node of highest weight known being the device itself if the latter has not received any other information cue,
- means for transmitting the information cue (14) stored in the device to nodes adjacent to this device,
- means for comparing information cues (14) transmitted to the device with the information cue stored in this device, so as to determine a new node of highest weight known by the device,
- verifying means intended to verify whether the stored information cue contains the device's own identifier,
said verifying means being able to be activated after the storing, transmitting and comparing means have been successively activated a predetermined number (k) of times, **and in that** the device comprises means for determining that this device is a master node (M), said determining means being able to be activated if the verifying means confirm that the stored information cue contains the device's own identifier.
